## Europäisches Patentamt

## European Patent Office

## Office européen des brevets

(19)

(11) Veröffentlichungsnummer: **0 092 110**
**B1**

(12) **EUROPÄISCHE PATENTSCHRIFT**

(45) Veröffentlichungstag der Patentschrift:
**12.03.86**

(21) Anmeldenummer: **83103370.9**

(22) Anmeldetag: **07.04.83**

(51) Int. Cl.⁴: **F 16 L  23/00,** F 24 F  13/02

(54) **Vorrichtung zum Verbinden von Kanalteilstücken für Klimaanlagen.**

(30) Priorität: **21.04.82 DE 3214693**

(43) Veröffentlichungstag der Anmeldung:
**26.10.83 Patentblatt 83/43**

(45) Bekanntmachung des Hinweises auf die Patenterteilung:
**12.03.86 Patentblatt 86/11**

(84) Benannte Vertragsstaaten:
**AT BE CH FR GB LI NL SE**

(56) Entgegenhaltungen:
**DE - A - 2 501 611**

(73) Patentinhaber: **Smitka, Günter, FriedenstraBe 9,
D 5860 Iserlohn 7 (DE)**

(72) Erfinder: **Smitka, Günter, FriedenstraBe 9,
D 5860 Iserlohn 7 (DE)**

(74) Vertreter: **Köchling, Conrad, Dipl.-Ing. et al,
Patentanwälte, Dipl.-Ing. Conrad Köchling Dipl.-Ing.
Conrad-Joachim Köchling Fleyer Strasse 135,
D-5800 Hagen 1 (DE)**

**Beschreibung**

Die Erfindung betrifft eine Vorrichtung zum Verbinden von Kanalteilstücken für Klimaanlagen und dergleichen, wobei jedes Kanalteilstück aus einer ebenen Platte, zum Beispiel aus Blech, zu einem beispielsweise rechteckigen Kanal geformt und an der seitlichen Stosskante verbunden ist, bestehend aus einer der Anzahl der Kanalseitenwände entsprechenden Anzahl von etwa U-förmigen Flanschprofilen, die an den Kanalteilstücken entlang den vorderen Stosskanten befestigt sind, und Eckwinkeln, die, die Flanschprofile zu jeweils einem Rahmen ergänzend, an an den Flanschprofilen gebildeten Aufnahmen fixierbar sind.

Eine derartige Vorrichtung ist beispielsweise aus dem DE-U-1 980 477 bekannt.

Dabei sind die Flanschprofile im wesentlichen U-förmig ausgebildet und die entsprechenden Eckwinkel ebenfalls U-förmig ausgebildet, so dass sie satt in die U-Profile der Flanschprofile einsetzbar sind.

Zur Befestigung der Eckwinkel ist entweder eine Verschweissung oder Verklebung erforderlich, oder aber die Verbindung zwischen Flanschprofil und Eckwinkel soll durch eine übergeschobene Schiebeleiste vorgenommen werden.

Die Verbindung der Eckwinkel mit den Flanschprofilen durch Schweissen oder ähnliche Massnahmen ist aber relativ aufwendig und muss sehr sorgfältig durchgeführt werden, da sich die Eckwinkel bezüglich des entsprechenden Flanschprofiles sehr leicht verschieben können, so dass keine ordnungsgemässe Befestigung erfolgt.

Die Befestigung mittels übergeschobenen Schiebeleisten ist nur bei fertig installiertem Kanal möglich, wobei dann eine endgültige Fixierung der Eckwinkel mittels Schweissen nicht mehr möglich ist, weil hierdurch die zwischen den benachbarten Flanschen befindliche Dichtung beschädigt würde.

Aus der DE-B-2 501 611 ist eine weitere gattungsgemässe Vorrichtung bekannt, bei der an der Basis der U-profilartigen Flanschprofile eine pilzartige Wulst angeformt ist, die zur vorläufigen und/oder endgültigen Fixierung des entsprechend geschlitzten Eckwinkels dienen soll.

Hierdurch wird aber die Herstellung des Flanschprofiles ebenso wie die Herstellung des entsprechenden Eckwinkels relativ erheblich verteuert, wobei zwangsläufig eine Schwächung des zur Stabilität der Flanschverbindung genutzten Eckwinkels durch die Schlitzung erfolgt.

Hiervon ausgehend liegt der Erfindung die Aufgabe zugrunde, eine Vorrichtung eingangs genannter Art zu schaffen, bei der mit einfachsten Mitteln und bei hervorragender Stabilität des Flanschprofiles und des entsprechenden Eckwinkels eine sehr einfache Vormontage von Flanschprofilen und Eckwinkeln möglich ist, wobei nachfolgend die Verbindung der Flanschprofile mit den Eckwinkeln mittels Schweissen oder dergleichen ausserordentlich genau und dennoch einfach herzustellen ist.

Zur Lösung dieser Aufgabe schlägt die Erfindung vor, dass die Aufnahmen durch an den Schenkeln der Flanschprofile angeordnete, zueinandergerichtete Vorsprünge, Falze, Sicken, Abbiegungen oder dergleichen gebildet sind und die Schenkel der Eckwinkel an diesen und an der Basis der Flanschprofile abstützbar in die so gebildeten Aufnahmen einschiebbar sind.

An Schenkeln von Flanschprofilen angeordnete, den Eckwinkel längs einer Aussenkante führende Abwinklungen sind zwar in der DE-A-2 501 611 für verschiedene Ausführungsbeispiele offenbart, doch dienen sie dort lediglich der exakteren Fixierung des längs der pilzartigen Wulst geführten, geschlitzten Eckwinkels.

Durch die erfindungsgemässe Anordnung von Vorsprüngen, Falzen, Sicken, Abbiegungen und/oder dergleichen an den Schenkeln der Flanschprofile wird eine Aufnahmekammer für den einzuschiebenden Eckwinkel gebildet, der nun lediglich mit seinem einen Schenkel stirnseitig in das entsprechende Flanschprofil einzuschieben ist und dort zumindest vorläufig kraftschlüssig gehalten ist.

Die Flanschprofile und Eckwinkel einer Rahmenverbindung sind demzufolge in aufeinanderfolgenden Arbeitsschritten vorläufig miteinander zu verbinden, ohne dass dieser Zusammenhalt selbständig wieder auseinanderfallen kann.

Eine Schwächung der Winkel und/oder der Flanschprofile erfolgt bei dieser Verbindungsart nicht, sondern es wird vielmehr eine Versteifung des Flanschprofiles durch die Anordnung der Vorsprünge und dergleichen erzielt.

Nach der Vormontage von Flanschprofilen und Eckwinkeln kann dieser vormontierte Rahmen der entsprechenden Schweissstation zugeführt werden, ohne dass es dazu besonderer Sorgfalt bedarf, weil die Flanschverbindung vorfixiert ist und sich nicht selbständig auseinanderlösen lässt.

Die endgültige Verbindung zwischen Eckwinkeln und Flanschprofilen kann nicht nur mittels Verschweissen, sondern auch mittels Verkörnen oder dergleichen vorgenommen werden, wobei hier die gleichen Vorteile auftreten.

Aus herstellungstechnischen Gründen und aus Gründen der Stabilität ist es vorteilhaft, dass die Vorsprünge und dergleichen über die gesamte Länge der Schenkel verlaufend ausgebildet sind.

Weiterhin ist es vorteilhaft, dass die Vorsprünge und dergleichen einen mindestens etwa der Dicke der Eckwinkel entsprechenden Abstand von der Flanschprofil-Basis aufweisen und die Eckwinkel eben ausgebildet und zwischen Vorsprüngen und Basis eingespannt sind.

Um für die Eckwinkel relativ dünnes Material verwenden zu können, ist bevorzugt, dass die Vorsprünge einen grösseren Abstand von der Flanschprofil-Basis aufweisen als der Dicke der Eckwinkel entspricht, dass die Eckwinkel gesickt bzw. verkröpft sind und dass sie mit ihren vorsprungsnahen Enden an den Vorsprüngen und mit ihrem Mittelteil an der Basis anlegbar sind.

Durch die Sickung bzw. Verkröpfung des Eckwinkels wird bei relativ dünner Stärke des Eckwinkelmaterials eine hervorragende Festigkeit erreicht. Des weiteren kann selbstverständlich auch die Basis des Flanschprofiles mit einer zum Flanschprofilinnenraum durchgedrückten Sicke oder dergleichen versehen sein, die dem einzusetzenden Eckwinkel angepasst ist.

Hierdurch wird eine weitere Versteifung der
Flanschprofilverbindung erzielt.

Die Befestigung dieser Flanschprofile kann in der
Art erfolgen, dass der bei einem fertigen Rahmen innenliegende Schenkel der Flanschprofile mit dem
entsprechenden Stirnrand des Kanalteilstückes
durch Schweissen oder dergleichen verbunden wird.

Vorteilhafterweise kann aber auch vorgesehen
sein, dass aussenseitig des kanalseitenwandnahen
Schenkels ein Umschlag als Kanalseitenwandaufnahme angebogen bzw. angeformt ist.

Dadurch kann der aus den Flanschprofilen und
Eckwinkeln gebildete Rahmen stirnseitig auf das entsprechende Kanalteilstück aufgeschoben und entweder verkörnt, punktgeschweisst oder mittels
Rastnasen klemmverbunden werden.

Die Anordnung derartiger Rastnasen ist beispielsweise aus dem DE-GM 1 980 477 bekannt.

Weitere Vorteile und Einzelheiten ergeben sich aus
der nachfolgenden Zeichnungsbeschreibung.

In der Zeichnung sind Ausführungsbeispiele der Erfindung dargestellt.

Es zeigt:

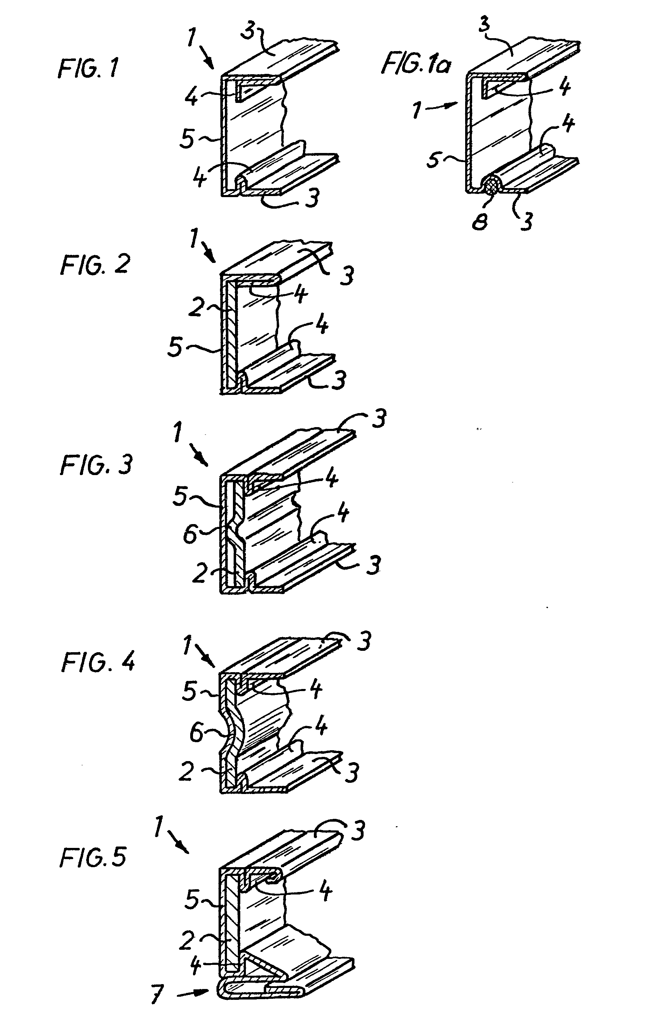

Fig. 1 bis 5 Varianten der Ausbildung von Flanschprofilen teilweise mit eingesteckten Eckwinkeln.

Die erfindungsgemässe Vorrichtung zum Verbinden von Kanalteilstücken für Klimaanlagen und dergleichen, wie diese aus dem Stand der Technik bekannt sind, besteht im wesentlichen aus einem U-
förmigen Flanschprofil 1 und in dieses stirnseitig eingesteckten Eckwinkeln 2, so dass jeweils mehrere
Flanschprofile und Eckwinkel zu einem Rahmen, beispielsweise zu einem rechteckigen Rahmen für
rechteckige Kanalteilstücke zusammengefügt werden können.

Die Flanschprofile 1 weisen an ihren Schenkeln 3
zueinandergerichtete Vorsprünge, Falze, Sicken,
Abbiegungen und dergleichen 4 auf.

Die Abbiegungen dienen zur Halterung der Schenkel der eingeschobenen Eckwinkel 2.

Gemäss Ausführungsbeispiel Fig. 2 ist ein ebener
Eckwinkel 2 zwischen die Korrespondenzflächen der
Abbiegungen 4 und die Basis 5 eingeschoben, so
dass eine kraftschlüssige Verbindung unter Federvorspannung erreicht wird.

Die Abstandsbemessung zwischen den Abbiegungen 4 und der Basis 5 ist derart, dass die lichte Weite
gering kleiner als die Dicke des entsprechenden Eckwinkels 2 ist.

Um den Eckwinkel leicht einschieben zu können,
kann dieser vorderseitig zugespitzt sein, so dass das
Einschieben sehr einfach und trotzdem lagerichtig
vorgenommen werden kann.

Die Abbiegungen 4 und dergleichen verlaufen jeweils über die gesamte Länge der Schenkel 3 der
Flanschprofile 1.

Gemäss Ausführungsbeispiel Fig. 3 ist der Eckwinkel mittig mit einer Sicke 6 versehen.

Der Eckwinkel 2 stützt sich an der Basis 5 mit der
Sicke 6 ab, während er sich an den Abbiegungen 4
ober- und unterseitig in den Schenkeln 3 des Flanschprofiles 1 ebenfalls abstützt.

Gemäss Ausführungsbeispiel Fig. 4 ist sowohl die Basis 5 des Flanschprofiles 1 mit einer längsverlaufenden Sicke versehen als auch der entsprechende
eingeschobene Eckwinkel 2 mit einer entsprechenden mittig angeordneten Sicke 6 versehen.

Auf diese Weise wird trotz geringer Materialbemessung eine hohe Steifigkeit der Verbindung erreicht.

Gemäss Ausführungsbeispiel Fig. 5 ist unterhalb
der Aufnahme für den Eckwinkel 2 an das Flanschprofil ein Umschlag 7 angebogen, in den die entsprechende Kanalstirnwand einschiebbar ist.

Der Umschlag kann mit entsprechenden Rastnasen der Kanalseitenwand zusammenwirken und so
eine Verklammerung des Flanschprofiles 1 auf dem
Kanalstück bewirken oder aber er kann mit der entsprechenden Kanalseitenwand punktverschweisst
oder verkörnt sein.

Die Erfindung ist nicht auf die Ausführungsbeispiele beschränkt, sondern vielfach variabel.

Die Ausführungsbeispiele gemäss Fig. 1 bis 4 können selbstverständlich in ähnlicher Weise wie bei Fig.
5 mit einem Umschlag 7 versehen sein, während
auch das Ausführungsbeispiel gemäss Fig. 5 gemäss
den übrigen Figuren ohne Umschlag 7 ausgebildet
sein kann, sofern der Benutzer die Verschweissung
des Verbindungsprofilrahmens mit dem entsprechenden Kanalteilstück bevorzugt.

Gemäss Ausführungsbeispiel Fig. 1a kann in die
der zugehörigen Kanalseitenwand zugewandte, untere Sicke 4 eine Dichtschnur aus gummielastischem
Material eingelegt oder eingeklemmt sein, um als zusätzliche Abdichtung zu wirken.

Es können zum Beispiel T-förmige Dichtungen verwandt werden, die in die Falzung der Sicke 4 oder
dergleichen mit ihrer Basis eingesteckt werden.

Es können aber bei entsprechend halbkreisförmiger Sickenprofilierung (Fig. 1a) auch Dichtschnüre 8
kreisrunder Querschnittsform verwandt werden, die
unter Vorspannung an die entsprechende Kanalseitenwand anlegbar sind.

**Patentansprüche**

1. Vorrichtung zum Verbinden von Kanalteilstükken für Klimaanlagen und dergleichen, wobei jedes
Kanalteilstück aus einer ebenen Platte, zum Beispiel
aus Blech, zu einem beispielsweise rechteckigen Kanal geformt und an der seitlichen Stosskante verbunden ist, bestehend aus einer der Anzahl der Kanalseitenwände entsprechenden Anzahl von etwa U-förmigen Flanschprofilen (1), die an den Kanalteilstücken entlang den vorderen Stosskanten befestigt
sind, und Eckwinkeln (2), die, die Flanschprofile zu
jeweils einem Rahmen ergänzend, an an den Flanschprofilen gebildeten Aufnahmen fixierbar sind, dadurch gekennzeichnet, dass die Aufnahmen durch
an den Schenkeln (3) der Flanschprofile (1) angeordnete zueinandergerichtete Vorsprünge, Falze, Sikken, Abbiegungen (4) oder dergleichen gebildet sind
und die Schenkel der Eckwinkel (2) an diesen und an
der Basis (5) der Flanschprofile (1) abstützbar in die
so gebildeten Aufnahmen einschiebbar sind.

2. Vorrichtung nach Anspruch 1, dadurch gekennzeichnet, dass die Vorsprünge (4) und dergleichen über die gesamte Länge der Schenkel (3) verlaufend ausgebildet sind.

3. Vorrichtung nach Anspruch 1 oder 2, dadurch gekennzeichnet, dass die Vorsprünge (4) und dergleichen einen mindestens etwa der Dicke der Eckwinkel (2) entsprechenden Abstand von der Flanschprofil-Basis (5) aufweisen und die Eckwinkel (2) eben ausgebildet und zwischen Vorsprüngen (4) und Basis (5) eingespannt sind.

4. Vorrichtung nach Anspruch 1 oder 2, dadurch gekennzeichnet, dass die Vorsprünge (4) einen grösseren Abstand von der Flanschprofil-Basis (5) aufweisen als der Dicke der Eckwinkel (2) entspricht, dass die Eckwinkel (2) gesickt bzw. verkröpft sind und dass sie mit ihren vorsprungsnahen Enden an den Vorsprüngen (4) und mit ihrem Mittelteil an der Basis (5) anlegbar sind.

5. Vorrichtung nach einem der Ansprüche 1 bis 4, dadurch gekennzeichnet, dass aussenseitig des kanalseitenwandnahen Schenkels (3) ein Umschlag (7) als Kanalseitenwandaufnahme angebogen bzw. angeformt ist.

## Claims

1. Means for connecting channel sections of air-conditioning plants and the like, each channel section being shaped from an even plate, e.g. of sheet metal, to form by way of example a rectangular channel, and connected at the lateral edge, comprising a number of say U-shaped flange profiles (1) corresponding to the number of channel side walls, attached to the channel sections along the front edges, and corner angles (2) completing the flange profiles to form each a frame and which can be attached to the receptacle formed at the flange profiles, characterized in that the receptacles are formed by projections, folds, beads, bends (4) or the like arranged towards each other at the legs (3) of the flange profiles (1), and that the legs of the corner angles (2) can be supportably inserted into the thus formed receptacles at these angles and at the base (5) of the flange profiles (1).

2. Means according to claim 1, characterized in that the projections (4) and the like are formed to extend over the whole length of the legs (3).

3. Means according to claim 1 or 2, characterized in that the projections (4) and the like present a distance from the flange profile base of at least about the thickness of the corner angles (2) and that the corner angles (2) are formed even and clamped between projections (4) and base (5).

4. Means according to claim 1 or 2, characterized in that the projections present a greater distance from the flange profile base (5) than corresponds to the thickness of the corner angles (2), that the corner angles (2) are crimped or bent to rigth angles and that with their ends near the projections they can be attached to the projections (4) and with their centre part to the base (5).

5. Means according the any one of claims 1 to 4, characterized in that on the outside of the leg (3) near the channel side wall a fold (7) is bent or formed to receive a channel side wall.

## Revendications

1. Dispositif pour raccorder des tronçons de canal pour climatiseurs et appareils semblables, chaque tronçons de canal étant fait d'une plaque plate par exemple de tôle, pour former un canal essentiellement rectangulaire, les tronçons raccordés au rebord latéral, comprend un nombre de brides profilées (1) correspondant au nombre des parois latérales de canal, les brides profilées attachées aux tronçons de canal de long des rebords antérieurs, et des cornières d'angle (2) qui complètent les brides profilées pour former chaque fois un cadre, et qui se laissent fixer aux receptacles formés par les brides profilées, caractérisé en ce que les receptacles sont formés par des projections, des plis, des moulures, des cintres (4) ou formations semblables disposées aux ailes (3) des brides profilées (1) et dirigées les unes vers les autres, et que les ailes des cornières d'angle (2) se laissent introduire dans les receptacles ainsi formés en s'appuyant sur les ailes et sur la base (5) des brides profilées (1).

2. Dispositif selon la revendication 1, caractérisé en ce que les projections (4) et formations semblables s'étendent sur toute la longueur des ailes (3).

3. Dispositif selon la revendication 1 ou 2, caractérisé en ce que les projections (4) et formations semblables présentent une distance de la base des brides profilées (5) d'au moins presque l'épaisseur des cornières d'angle (2), et que les cornières d'angle (2) sont formées plates et enserrées entre les projections (4) et la base (5).

4. Dispositif selon la revendication 1 ou 2, caractérisé en ce que les projections (4) présentent une distance de la base des brides profilées (1) plus grande que l'épaisseur des cornières d'angle (2), que les cornières d'angle (2) sont soyées ou munies de crossettes et que avec leurs extrémités près de la projection elles peuvent être attachées aux projections et avec leur partie centrale à la base (5).

5. Dispositif selon l'une quelconque des revendications 1 à 4, caractérisé en ce que à l'extérieur de l'aile (3) près de la paroi latérale de canal est formé un pliage (7) comme receptacle de la paroi latérale de canal.

FIG. 1

FIG. 1a

FIG. 2

FIG. 3

FIG. 4

FIG. 5